# EUROPÄISCHE PATENTSCHRIFT

(11) **EP 0 675 293 B1**
(45) Veröffentlichungstag und Bekanntmachung des Hinweises auf die Patenterteilung: **15.03.2000**
(21) Anmeldenummer: 94118280.0
(22) Anmeldetag: 21.11.1994
(51) Int. Cl.: F16B 13/08, F16B 5/02

(54) **Verstellbarer Feuerfestdübel mit Dübelschraube**
Fire resistant adjustable dowel with screw
Cheville réglable résistante au feu avec vis

(30) Priorität: 30.03.1994 DE 4410988
(43) Veröffentlichungstag der Anmeldung: 04.10.1995
(73) Patentinhaber: Einsiedler, Helmut, D-79736 Rickenbach-Hottingen (DE)
(72) Erfinder: Einsiedler, Helmut, D-79736 Rickenbach-Hottingen (DE)
(74) Vertreter: Termin, Erich

(56) Entgegenhaltungen:
- EP-A- 0 190 460
- DE-U- 1 899 123
- FR-A- 2 178 985
- US-A- 3 999 339

## Beschreibung

Vorliegende Erfindung betrifft einen Feuerfestdübel, mit einer dazugehörenden Dübelschraube mit der Doppelfunktion der Dübelfixierung im Eindringmaterial und der Möglichkeit der Distanzvariierung von Gegenständen mittels der Dübelschraube, in bezug zum Eindringmaterial.

Ein typischer diesbezüglicher Anwendungsfall sind abgehängte Verkleidungen von Decken in verschiedenartigen Räumen, oder von Wandpanelen, bei deren Befestigung an Seitenwänden.

Abgehängte Decken sind an sich bekannt, insbesondere bei Industriebauten, wo Rohrleitungen verschiedenster Art und Zweckbestimmungen verkleidet werden. In diesem Bereich gibt es eine Vielfalt von Systemen, mittels denen die Aufhängung bewerkstelligt werden kann.

Anders sieht die Situation im Bereich des Schreiner- beziehungsweise Gipserhandwerks aus. In diesen Fällen geht es meist nur um die dekorative Raumauskleidung, bei der Gestaltung von abgehängten Decken, beziehungsweise bei aufgesetzten Panelen.

Gegebenenfalls können beide Auskleidungsarten zusätzlich mit einer hinterlegten Isolierung kombiniert werden. In diesen Fällen werden Haltesysteme benötigt, die eine dauerhafte, feuerfeste und stabile Verankerung im Eindringmaterial gewährleisten. Zu berücksichtigen ist des weiteren auch die Raumknappheit die zur Verfügung steht um eine großflächige Nivellierung der Verkleidung, in bezug zum Eindringmaterial vornehmen zu können.

Ein besonderes Problem im zitierten Anwendungsbereich ist die Lotausrichtung der im Eindringmaterial zu befestigenden Systeme. So müssen genannte Berufsgruppen, beispielsweise die Schreiner, bei der Waagerechtausrichtung von abgehängten Deckenverkleidungen, immer wieder auf die alte Methode der Unterfütterung zurückgreifen, wenn Betondecken beispielsweise Unebenheiten aufweisen. Zum Stande der Technik gehören zwar einfach handhabbare Feuerfestdübel nach DIN 4102, die der Feuerfestklasse 90/120 entsprechen. Diese sind jedoch, einmal fixiert, nicht mehr veränderbar, was eine Distanzvariierung zwischen Eindringmaterial und zu befestigendem Material unmöglich macht, wenn nicht die Dübelverankerung geschwächt werden soll.

Es handelt sich somit um spezielle Handwerksarbeiten, bei denen eine ebene und exakt nivellierte Flächenausrichtung für die qualifizierte Arbeitsausführung wesentlich ist.

Dies ist so zu verstehen, daß für die zu verkleidenden, meist aus Beton bestehenden Decken und aus Ziegelmauersteinen bestehenden Wandmaterialien, Verankerungs- und Halte-Distanznivelliersysteme für das Verkleidungsmaterial benötigt werden, die einerseits, im zu verkleidenden Material (Eindringmaterial) eine dauerhafte, feuerfeste und statisch stabile Befestigung des Verkleidungsmaterials gewährleisten, und die andererseits es gestatten, daß sich der zu befestigende Verkleidungsgegenstand nach der Verankerung, im Bezug zum Eindringmaterial, noch in einem vorgegebenen Distanzbereich niveaumässig verändern läßt.

Im Stand der Technik ist zwar in der DE-U- 1 899 123 ein Metalldübel beschrieben der einen Spreizbackenkopf besitzt. Der Spreizbackenkopf beansprucht jedoch nur den Einsatz bei weichen, beziehungsweise hohlen Materialien. Bei Vollmaterialien wie Beton, würden die Spreizbacken nicht greifen, sondern würden an der Betonwand gleiten ohne einzurasten. Die erfindungsgemäße Verankerungskonzeption erfolgt dagegen so, daß die krallenartigen Enden der Spreizbacken 23, scharf, punktuell im Eindringmaterial einrasten. Dies wird dadurch schwerpunktmäßig erreicht, weil die Spreizbackenverankerung zweiphasig verläuft. Die erste Phase arbeitet nach dem Druckprinzip, nämlich wird der Spreizkonus G in den Spreizkopf E gedrückt. Dadurch spreizen sich die Spreizbacken 23 und die krallenartigen Enden der Spreizbacken drücken sich punktbezogen in das Eindringmaterial. Ein Abdriften beziehungsweise Gleiten an der Wand des Eindringmaterials scheidet dadurch aus. Erst nachdem der Spreizkonus vollkommen in den Spreizkopf eingedrungen ist, wechselt die Druckphase in die Zugphase, die die Verankerung der Spreizbacken noch verstärkt.

Aufgabe der Erfindung war es, eine Vorrichtung sowie ein Verfahren zu finden, die es erlauben, zu befestigende Konstruktionen D an Eindringmaterialien C dauerhaft zu verankern, beispielsweise abgehängte Deckenverkleidungen an Betondecken und die es erlauben, die zu befestigenden Konstruktionen nach der Verankerung im Eindringmaterial derart zu befestigen, daß sie anschließend noch nivellierend ins Lot gebracht werden können und das in einem Arbeitsgang. Ein Arbeitsgang ist hierbei so zu verstehen, daß nach der Befestigung der Konstruktion und der eventuell erforderlichen Nivellierung ins Lot mittels dem Dübelschraubenteil 7, keine weiteren zeit- und materialaufwendigen Zusatzarbeiten, wie das Unterkeilen etc., durchgeführt werden müßten.

Die Aufgabe der Erfindung wurde gelöst, durch eine Vorrichtung gemäß Anspruch 1.

Des weiteren beschreibt Anspruch 3 die Verfahrens- und Funktionsweise der Befestigungs- und Nivellierungsprozedur mittels dem erfinderischen Metalldübel.

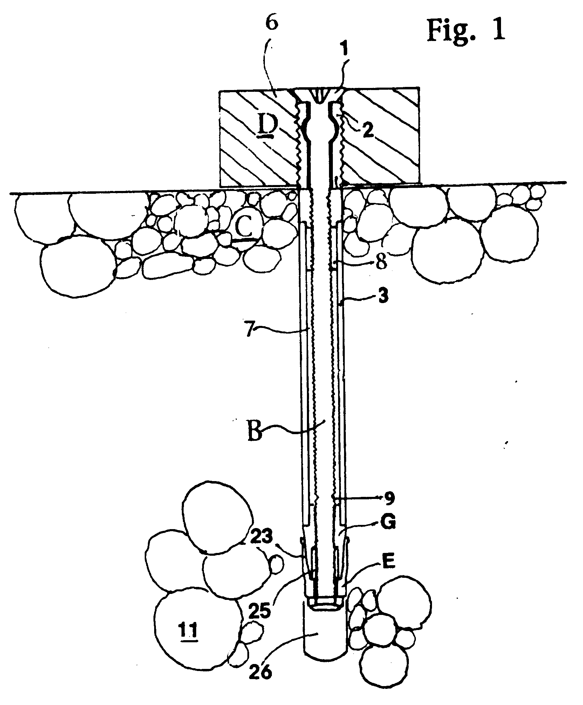

Anhand der folgenden Figuren 1 bis 5 wird die Ausgestaltung des Erfindungsgegenstandes im Detail dargestellt und somit ausführlich erläutert.

Die Figuren zeigen im Detail;
- Fig. 1 -: zeigt einen Schnitt durch die Mittelachse des erfinderischen Dübels A im Zustand gerade nach dem Einschlagen im Eindringmaterial C.
- Fig. 2 -: zeigt den gleichen Schnitt im Zustand nach der Befestigung des Dübels im Eindringmaterial mittels den Spreizbacken 23 des Spreizkopfes E, dem bereits erfolgten Bruch der Dübelschraube B in der Sollbruchstelle 9, und der Nivellierung des Verkleidungsgegenstandes D auf den Abstand X, bezogen auf das Eindringmaterial C und den Verkleidungsgegenstand D.
- Fig. 3 -: zeigt den Dübel A in der mittelachsoffenen Draufsicht.
- Fig.4 -: zeigt die Dübelschraube B in der Draufsicht.

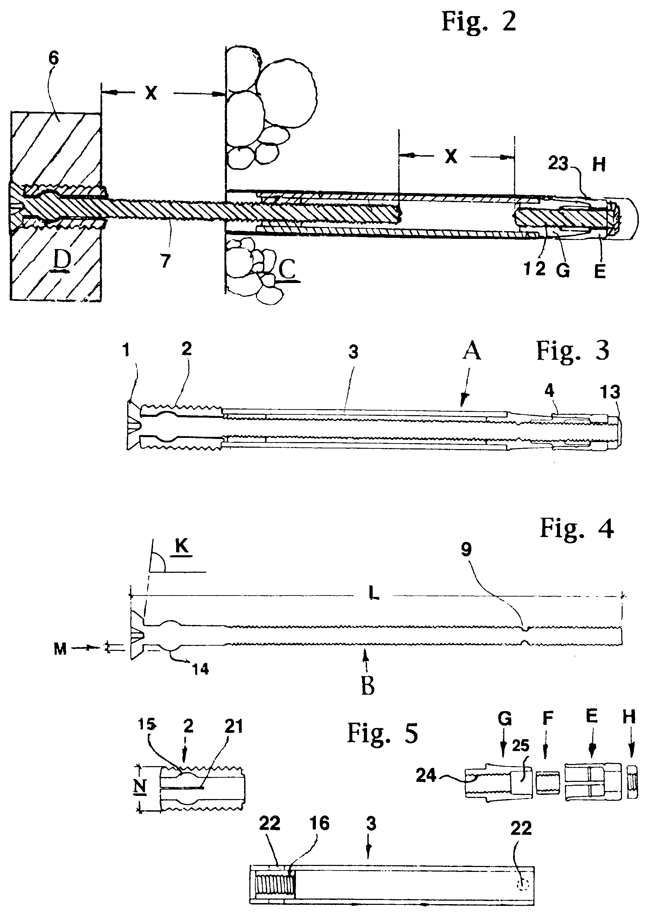

- Fig.5 -: zeigt die, außer der Dübelschraube, den Dübel A bildenden Bestandteile; und zwar, die geriffelte Hülse 2 mit den Dehnspalten 21 zum Überstülpen der Hülse über den Dübelschraubenwulst. Hülse 2 bewirkt, daß nach dem Einschlagen des Dübels durch den zu befestigenden Gegenstand, die Hülse 2 im Gegenstand D fixiert wird und ein Drehlager für den Dübelschraubenwulst bildet. Dadurch kann der zu befestigende Gegenstand D beliebig hin und her nivelliert werden, ohne das Einschlagloch im zu befestigenden Gegenstand auszuarbeiten (auszuleiern). Fig. 5 zeigt des weiteren die Dübelhülse 3 mit den Montage-Fixierlochungen 22 und der Gewindeführungshülse 8, den Spreizkonus G mit dem Innengewinde 24 und dem Abstandhalterstauraum 25, den Spreizkopf E mit den Spreizbacken 23 und den Fixierkopf H, der mit dem Dübelschraubenende, fest verkeilt, verschweißt oder anderweitig fest verankert ist.

Der Metalldübel A besteht aus einer Dübelhülse 3 mit dem Spreizkonus G und einer in der Dübelhülse liegenden Dübelschraube B, die mittels der Gewindeführungshülse 8 und dem Innengewinde 24 des Spreizkonus G im Dübel integriert ist, wobei die Dübelschraube Beine als Sollbruchstelle bezeichnete Durchmesserverjüngung 9 besitzt, und am Ende der Dübelhülse 3, sich ein Spreizkonus G befindet, mit einem Innengewinde 24, das die Dübelschraube B aufnimmt und am vorderen Ende der Dübelschraube B sich ein Spreizkopf E mit den Spreizbacken 23 befindet. Auf Positionsdistanz gehalten wird ein Abstandhalter F. Der Spreizkopf ist mit der Dübelschraube B fest verbunden mittels dem Fixierkopf H. Der Dübel A wird im Eindringmaterial C mittels dem Spreizkopf E durch folgende Funktionsweise verankert: durch das Drehen der Dübelschraube B, mittels dem Dübelschraubenkopf 1, wird der Spreizkopf E samt den Spreizbacken 23 auf den Spreizkonus G gezogen, wodurch die Spreizbacken 23 in das zu verankernde Material C greifen, und durch weiteres Drehen der Dübelschraube B wird der Spreizkonus G in den Spreizkopf E gespannt, wodurch sich die Spreizbacken 23 immer stärker im Eindringmaterial C verspannen und sich die Spannungszugkraft, die sich durch das Drehmoment der Dübelschraube in Torsionsscherkraft, auf die Dübelschraube wirkend, umsetzt, bis hin zu einem Wert, der dem Sollbruchwert der Dübelschraube in der Sollbruchstelle, der Verjüngungsstelle 9, entspricht, und bei dem es zum Bruch der Dübelschraube in zwei Teile kommt, den vorderen Dübelschraubenteil 12 und den hinteren Dübelschraubenteil 7. Die beiden Dübelschraubenteile erfüllen nun folgenden Eigenfunktionen:
a.) der vordere Dübelschraubenteil 12 fixiert den Dübel A im Eindringmaterial C mittels den gespreizten Spreizbacken 23 des Spreizkopfs E und über das Innengewinde 24 des Spreizkonus G, verbunden mit der Dübelhülse 3 mit der Gewindeführungshülse 8, wodurch über Hülse 3 eine Verbindung zum hinteren Dübelschraubenteil 7 besteht, und
b.) besitzt nun der hintere Dübelschraubenteil 7 durch das weitere Drehen des Dübelschraubenkopfes 1 mittels der Gewindeführungshülse 8 einen linearen Distanzbewegungsbereich X als Variierungsspielraum zum Nivellieren des Befestigungsgegenstandes D.

Im Innenbereich der Spreizbacken 23, zwischen dem Spreizkonus G und dem Spreizkopf-Innenbereichsende, befindet sich ein sogenannter Abstandshalter F der aus Aluminium, Messing oder auch Polyamid hergestellt sein kann.

Dieser hält den Spreizkopf E in der Endposition des vorderen Teils der Dübelschraube. Andererseits ist der Abstandshalter so geformt, daß er in den Spreizkonushals hineinpaßt.

Beim Einschlagen des Dübels A in das Eindringmaterial C, wird dadurch der Spreizkopf E in der Enddistanz des Vorderteils 12 der Schraube B gehalten und verhindert, daß die Spreizbacken 23 vorzeitig, unerwünscht greifen.

Desweiteren verhindert der Abstandhalter F ein Verkanten des Spreizkopfes E während dem Einschlagen des Dübels.

Beim Spannen des Spreizkopfes gleitet der Abstandhalter gegebenenfalls in den speziell ausgeformten Hals des Spreizkonus G.

Deshalb wurde die Aufgabe der Erfindung des weiteren durch einen Metalldübel A gelöst, wie voran abgehandelt, und der des weiteren dadurch gekennzeichnet ist, daß sich auf der Dübelschraube B, im Innenbereich der Spreizbacken 23, zwischen dem Spreizkonus G und dem Spreizkopfinnenbereichsende ein Abstandhalter F befindet, der beim Einschlagen des Dübels A in das Eindringmaterial C, ein vorzeitiges Aufschieben des Spreizkopfes E auf den Spreizkonus G, und ein eventuelles Verkanten des Spreizkopfes im Eindringmaterial C, verhindert.

Das mit diesem Dübel praktizierbare Arbeitssystem ist auch umweltbedeutsam. Mit diesem System ist es möglich, beispielsweise eine Verkleidungsart gegen eine andere auszutauschen, ohne daß die Dübelverankerung ausgetauscht werden muß.

Beim Austausch einer Verkleidung würde, zwecks Arbeitserleichterung, lediglich die Dübelhalbschraube 7 und die Hülse 2 genügen, um eine neue Verkleidungsart in der bestehenden Dübelverankerung zu befestigen.

Die aufgeführten Figuren sind als beispielhaft anzusehen.

| Positions-Zahlen-Liste | |
|---|---|
| Pos | Benennung; Designation |
| 1 | Dübelschraubenkopf |
| 2 | Geriffelte Hülse |
| 3 | Dübelhülse |
| 4 | Dübelspreizbacken |
| 6 | Holzlatte |
| 7 | Hinteres Bruchstück der Dübelschraube zur Distanzvariierung des Befestigungsgegenstandes inbezug zum Eindringmaterial |
| 8 | Gewindeführungshülse zu 7 |
| 9 | Sollbruchstelle, Dübelschrauben-Durchmesserverjüngung |
| 11 | Eindringmaterial - Beton |
| 12 | Vorderes Dübelschraubenbruchteil, |
| 13 | Verschweissung von Dübelschraube |
| 14 | Dübelschraubenhalswulst |
| 15 | Hülsenhalseinrastmulde |
| 16 | Dübelschraubenwulst |
| 21 | Dehnspalte der geriffelten Hülse 3 |
| 22 | Montage-Fixierlochung |
| 23 | Spreizbacken von E |
| 24 | Innengewinde des Spreizkonus G |
| 25 | Abstandhalterstauraum |
| 26 | Bohrlochstauraum |
| A | Dübei |
| B | Dübelschraube |
| C | Eindringmaterial |
| D | zu befestigender Gegenstand |
| E | Spreizkopf |
| F | Abstandhalter |
| G | Spreizkonus |
| H | Fixierkopf |
| K | Umfassungswinkel |
| L | Dübelschraubengesamtlänge |
| M | Auswuchtdistanz der Dübelschraubenwulst |
| X | variierbare Distanz zwischen C und D = praktische Distanz zwischen C und D |
| N | Durchmesser der geriffelten Hülse 2 |

## Patentansprüche

1. Metalldübel (A), bestehend aus einer Dübelhülse (3) mit einem Spreizkonus (G) am vorderen Ende der Dübelhülse (3) und aus einer in der Dübelhülse (3) liegenden Dübelschraube (B) mit einem Spreizkopf (E), dessen Spreizbacken (23), die der Verankerung des Dübels (A) im Eindringmaterial (C) dienen, gegen die Zugrichtung außen am Spreizkonus anliegen, dadurch gekennzeichnet, daß der Spreizkonus (G) ein Innengewinde (24), die Dübelhülse (3) am hinteren Ende eine Gewindeführungshülse (8) mit Innengewinde und die Dübelschraube, die mit den Innengewinden (24) von Spreizkonus (G) und Gewindeführungshülse (8) in Eingriff steht, und die fest verbunden ist mit einem Fixierkopf (H) zwecks der Positionierung des frei drehbaren Spreizkopfes (E) an der Dübelschraube (B), eine zwischen den beiden Innengewinden (24) von Spreizkonus (G) und Gewindeführungshülse (8) befindliche als Sollbruchstelle ausgeführte Durchmesserverjüngung (9) zur Unterteilung der Dübelschraube in einen dem Spreizkopf (E) zugewandten vorderen (12) und einen hinteren Dübelschraubenteil (7) aufweist.

2. Metalldübel nach Anspruch 1, dadurch gekennzeichnet, daß sich auf der Dübelschraube (B), im Innenbereich der Spreizbacken (23), zwischen dem Spreizkonus (G) und dem Spreizkopf-Innenbereichsende, ein Abstandhalter (F) befindet, der beim Einschlagen des Dübels in das Eindringmaterial (C) ein vorzeitiges Aufschieben des Spreizkopfes (E) auf den Spreizkonus (G) und ein eventuelles Verkanten des Spreizkopfes im Eindringmaterial verhindert.

3. Verfahren zur Anwendung des Metalldübels (A), gemäß den Ansprüchen 1 und 2, im Bereich der Befestigung von Verkleidungskonstruktionen (D) an Eindringmaterialien (C),
dadurch gekennzeichnet, daß in einer ersten Arbeitsstufe die Befestigung der Konstruktion (D) an das Eindringmaterial (C) erfolgt und in einer zweiten Arbeitsstufe nach dem Bruch der Dübelschraube in der Sollbruchstelle (9), durch die mögliche Justierbarkeit der Konstruktion (D) in bezug zum Eindringmaterial (C), die Funktionsweise der beiden Arbeitsstufen wie folgend abläuft:
Der Metalldübel wird mittels einer Bohrung durch die Verkleidungskonstruktion in das Eindringmaterial (C) eingesetzt, durch das Drehen der Dübelschraube (B), mittels dem Dübelschraubenkopf (1), wird der Spreizkopf (E) mit den Spreizbacken (23) auf den Spreizkonus (G) gezogen, wodurch die krallenartig ausgebildeten Enden der Spreizbacken, sich im Eindringmaterial verankern und durch das weitere Drehen der Dübelschraube, wird der Spreizkonus (G) in den Spreizkopf (E) gepreßt, wodurch die Krallen der Spreizbacken (23) noch stärker ins Eindringmaterial (C) eindringen, bis hin zu einem Torsionswert, bei dessen Erreichen der Sollbruchwert der Verjüngung (9) der Dübelschraube (B) ebenfalls erreicht ist, wodurch es zum Bruch der Dübelschraube (B) in zwei Teile kommt, den vorderen dem Spreizkopf zugewandten Teil (12) und den hinteren Teil (7), die folgende Eigenfunktionen erfüllen:
a.) der vordere Dübelschraubenteil (12) arretiert die Verankerung des Spreizkopfes (E) im Eindringmaterial (C) und über die Dübelhülse (3) besteht eine Verbindung zum hinteren Dübelschraubenteil (7) der
b.) nun mittels der Gewindeführungshülse (8) durch entsprechende Schraubbewegungen im Distanzbereich (X) linear bewegt werden kann und wodurch der Distanzbereich (X) als Spielraum zum Nivellieren der Konstruktion (D) nutzbar ist.

## Claims

1. Metal plug (A), consisting of a plug bushing (3) with a straddling cone (G) at the front end of the plug bushing (3) and, positioned in the plug bushing (3), of a plug screw (B) with a straddling head (E), the jaws (23) of which serve the anchorage of the plug (A) in the penetrated material (C) and are closely placed at the outside of the straddling cone against the direction of traction, having the characteristic that the straddling cone (G) is equipped with an internal thread (24), the plug bushing (3), at the rear end, with a thread guiding bushing (8) with an internal thread and the plug screw, which is engaged with the internal threads (24) of the straddling cone (G) and the thread guiding bushing (8), and which is firmly connected to a fastening head (H) for the purpose of positioning the freely turnable straddling head (E) at the plug screw (B), with a diameter reduction (9) designed as a predetermined breaking point for the subdivision of the plug screw into a front part (12) directed towards the straddling head (E) and a rear plug screw part (7) and positioned between the two internal threads (24) of the straddling cone (G) and the thread guiding bushing (8).

2. Metal plug in accordance with Claim 1, having the characteristic that, on the plug screw (B) in the internal area of the straddling jaws (23) between the straddling cone (G) and the end of the internal area of the straddling head, a spacer (F) is situated which prevents that the straddling head (E) is prematurely pushed onto the straddling cone (G) and possible tilting of the straddling head in the penetrated material (C) upon the plug being driven into the penetrated material.

3. Procedure for the application of the metal plug (A) in accordance with Claims 1 and 2 in the area of fastening of panelling constructions (D) on penetrated materials (C),
having the characteristic that, in a first working step, the construction (D) is fastened to the penetrated material (C) and, in a second working step, after the plug screw has been broken at the predetermined breaking point (9), because of the possible adjustability of the construction (D) in respect of the penetrated material (C) functioning of the two working steps proceeds as follows:
The metal plug is inserted into the penetrated material (C) by means of a drilled hole through the panelling construction, by turning the plug screw (B), by means of the plug screw head (1), the straddling head (E) with the straddling jaws (23) is pulled onto the straddling cone (G) as a result of which the claw-like designed ends of the straddling jaws anchor themselves in the penetrated material and by turning the plug screw further, the straddling cone (G) is pressed into the straddling head (E) as a result of which the claws of the straddling jaws (23) are penetrating the penetrated material (C) even stronger up to a torsion value upon the achievement of which the predetermined breaking value of the reduction (9) of the plug screw (B) has also been reached which causes the fracture of the plug screw (B) into to parts, the front part (12) facing the straddling head and the rear part (7), which fulfil the following individual functions:
a.) the front plug screw part (12) locks the anchorage of the straddling head (E) in the penetrated material (C) and, via the plug bushing (3), a connection to the rear plug screw part (7) exists which
b.) can now be moved in a linear fashion by means of the thread guiding bushing (8) by respective screwing movements in the distance area (X) and as a result of which the distance area (X) is useable as an allowance for leveling the construction (D).

## Revendications

1. Cheville métallique (A) composée d'une gaine de cheville (3) avec un cône d'écartement (G) à l'extrémité avant de la gaine de cheville (3) et d'une vis à cheville (B) placée dans la gaine de cheville (3) avec une tête d'écartement (E) dont les mâchoires d'écartement (23) servant à l'ancrage de la cheville (A) dans le matériau à pénétrer (C) se situent dans le sens contraire à la traction sur la face extérieure du cône d'écartement, caractérisée de manière à ce que le cône d'ecartement (G) présente un taraudage (24), que la gaine de cheville (3) dispose d'une douille de guidage filetée (8) à son extrémité pourvue d'un taraudage et la vis de cheville en prise avec le taraudage (24) du cône d'écartement (G) et de la douille de guidage filetée (8) est fermement reliée à une tête de fixation (H), en vue du positionnement de la tête d'écartement (E) rotative sur la vis de cheville (B), et présente entre les deux taraudages (24) du cône d'écartement (G) et de la douille de guidage filetée (8) un rétrécissement du diamètre (9) en qualité de point destiné à la rupture afin de diviser la vis de cheville en une partie avant (12) dirigée vers la tête d'écartement (E) et une partie arrière (7).

2. Cheville métallique selon spécification 1, caracterisée de manière à ce que la partie intérieure des mâchoires d'écartement (23) entre le cône d'écartement (G) et l'extrémité de la partie intérieure de la tête d'écartement de la vis de cheville (B) présente un distancier (F) capable d'éviter que la tête d'écartement (E) puisse glisser prématurément sur le cône d'écartement (G) en enfonçant la cheville dans le matériau à pénétrer (C) et de prévenir ainsi un blocage éventuel de la tête de cheville dans le matériau à pénétrer.

3. Procédé d'utilisation de la cheville métallique (A) selon les spécifications 1 et 2 dans le domaine de la fixation de constructions d'habillage (D) sur des matériaux à pénétrer (C), caractérisé de manière à ce que la fixation de la construction (D) sur le matériau à pénétrer (C) est effectuée pendant une première étape suivie d'une deuxième étage après la rupture de la vis de cheville au niveau du point destiné à la rupture (9) permettant d'ajuster la construction (D) par rapport au matériau à pénétrer (C) en sachant que les deux étapes fonctionnent de la manière suivante :
La cheville métallique est placée dans le matériau à pénétrer (C) en traversant la construction d'habillage à l'aide d'un alésage, en tournant la vis de cheville (B) à l'aide d'un tournevis (1) la tête d'écartement (E) avec les mâchoires d'écartement (23) est reliée au cône d'écartement (G) ayant pour conséquence que les extrémités des mâchoires d'écartement en forme de griffes s'ancrent dans le matériau à pénétrer et que le cône d'écartement (G) s'enfonce encore plus dans la tête d'écartement (C) en continuant de tourner la vis de cheville, les mâchoires d'écartement (23) s'emboutissent de plus en plus dans le matériau à pénétrer (C) jusqu'à obtention de la valeur de torsion nécessaire au point destiné à la rupture du rétrécissement (9) de la vis de cheville (B) pour rompre la vis de cheville (B) en deux parties, soit une partie avant (12) dirigée vers la tête d'écartement (E) et une partie arrière (7) répondant aux fonctions individuelles désignées ci-après :
a.) la partie avant de la vis de cheville (12) bloque l'ancrage de la tête d'écartement (E) dans le matériau à pénétrer (C) et maintient simultanément un lien avec la partie arrière de la vis de cheville (7) par l'intermédiaire de la gaine de cheville (3) et permet ainsi
b.) par le biais de la douille de guidage filetée (8) de déplacer la vis au niveau de l'écartement (X) linéaire et de profiter du jeu de l'écartement (X) pour ajuster la construction (D).
